# EUROPEAN PATENT SPECIFICATION

(11) **EP 1 923 141 B1**
(45) Date of publication and mention of the grant of the patent: **06.04.2011**
(21) Application number: 07021212.1
(22) Date of filing: 30.10.2007
(51) Int. Cl.: B05B 11/00

(54) **Autoclavable piston guide ring**
Autoklavierbarer Kolbenführungsring
Bague de guidage de piston autoclavable

(30) Priority: 09.11.2006 CA 2567670
(43) Date of publication of application: 21.05.2008
(73) Proprietor: Gotohti.com Inc., Beamsville, ON L0R 1B4 (CA)
(72) Inventor: Ophardt, Heiner, Ontario, L0R 2C0 (CA); Anhuf, Martin, 47475 Kamp-Lintfort (DE)
(74) Representative: Grünecker, Kinkeldey, Stockmair & Schwanhäusser Anwaltssozietät

(56) References cited:
- DE-U1- 8 124 905
- US-A- 1 623 504

## Description

### Scope of the Invention

This invention relates to an improved guide ring for a piston pump and, more particularly, to a guide ring adapted to withstand autoclaving procedures to sterilize the pump.

### Background of the Invention

US 1,623,504 shows an atomizer for atomizing liquids. The atomizer comprises a pump cylinder, an inlet tube and a combined piston and discharge tube with a discharge outlet.
The lower end of the piston and discharge tube carries a piston, which is slidably engaged in the pump cylinder. The piston comprises an inner shell which has a reduced upper end that enters the piston and discharge tube. The piston and discharge tube is shrunk on the upper end of the inner shell and secures a washer and a first packing on the inner shell. A second shell is forced on the inner shell so that a valve chamber is formed. An outlet valve is placed inside the valve chamber. The second shell has a nipple at its lower end which forms an inlet and a seal for the outlet valve. The nipple of the second shell carries a second lower packing and a washer. At the lower end of the pump cylinder a second valve, the inlet valve is placed. Therefore, the piston of the atomizer comprises two packings, one of them, the second packing being placed downstream of the outlet valve and the other, the first packing, being placed upstream of the outlet valve.

Furthermore, fluid dispensers are known with pump mechanisms which are to be subjected to autoclaving procedures for sterilization preferably on regular periodic intervals. Autoclaving requires subjecting the pump to elevated temperatures such as 120 degrees Celsius to 150 degrees Celsius for periods of time.

The present inventor has appreciated that many prior art pump mechanisms, after being subjected to autoclaving, often do not adequately pump fluid and believe that such degradation in pumping arises due to plastic seals becoming deformed during the autoclaving process.

### Summary of the Invention

To at least partially overcome these disadvantages of previously known devices, the present invention provides a piston pump having a piston slidable within a cylindrical chamber, the piston carrying both a sealing flange to provide a slidable fluid impermeable seal with an inner wall of the chamber and a guide ring slidable in the chamber to assist in maintaining the sealing member coaxially within the chamber during autoclaving.

Accordingly, in one aspect, the present invention provides a pump for dispensing fluids from a reservoir comprising:
a piston-chamber forming member formed from metal having a cylindrical chamber about a central axis, said chamber having a chamber wall, an inner end in fluid communication with the reservoir and an open outer end;
a piston forming element having a piston portion coaxially slidably received in the chamber,
the piston portion including a hollow stem with an inner portion coaxially slidably received in the chamber for reciprocal sliding inwardly and outwardly therein and with an outer portion extending outwardly of the open outer end of the chamber,
the stem defining therein a central passageway with an inner inlet end opening into the chamber and an outer end communicating with a discharge outlet on the outer portion of the stem out of the chamber,
a plastic annular sealing member fixedly secured to the inner end of the stem within the chamber axially spaced from the locating member,
the sealing member including an annular sealing flange slidably engaging an inner surface of the chamber wall forming a substantially fluid impermeable seal therewith on sliding of said piston forming element inwardly and outwardly,
a central bore through the sealing member providing for the inlet opening of the passageway to be in communication with the reservoir through the sealing member,
wherein the sealing member further includes an annular locating flange, which is spaced axially from the annular sealing flange and which slidably engages the inner surface of the chamber wall over an axial extent at least equal to 1/8 of a diameter of the chamber, which is sufficient to assist in resisting the annular sealing flange from assuming a non-coaxial position relative to the chamber during autoclaving treatment with the piston portion in the chamber and a locating portion within the outer open end of the chamber under temperatures exceeding 120 degrees Celsius,
the central bore at an outer end of the sealing member providing an outwardly directed cylindrical socket,
a locating portion is fixedly carried on the stem slidably engaged within the chamber proximate the open outer end of the chamber to assist in coaxially locating the stem coaxially of the central axis,
the stem includes a generally cylindrical metal tube extending continuously inwardly from the outer portion through the locating portion along the central axis to an inner end of the tube which is coaxially received in the outwardly directed cylindrical socket provided on the outer end of the sealing member,
an outlet one way valve between the chamber and the annular sealing flange permitting fluid flow through the central bore only from the chamber into the passageway.

In another aspect, the present invention provides a pump for dispensing fluids from a reservoir comprising:
a piston-chamber forming member formed from metal having a cylindrical chamber about a central axis, said chamber having a chamber wall, an inner end in fluid communication with the reservoir and an open outer end;
a piston forming element having a piston portion coaxially slidably received in the chamber, a locating member slidably engaged within the open outer end of the chamber to assist in coaxially locating the piston portion coaxially of the central axis and with an outer portion extending outwardly from the open outer end of the chamber,
the piston forming element including a generally cylindrical metal tube extending continuously inwardly from the outer portion through the locating member along the central axis and centrally through the piston portion,
the tube defining therein a central passageway with an inner end opening into the chamber and an outer end communicating with a discharge outlet on the outer portion,
a plastic piston sealing member within the chamber fixedly secured to the inner end of the tube,
the sealing member including:
   (a) at an outer end, an outwardly directed cylindrical socket to frictionally engage the inner end of the tube coaxially therein;
   (b) at an inner end, an annular sealing flange slidably engaging an inner surface of the chamber wall forming a substantially fluid impermeable seal therewith on sliding of said piston forming element inwardly and outwardly, and
   (c) an annular locating flange spaced axially from the annular sealing flange slidably engaging the inner surface of the chamber wall over an axial extent sufficient to assist in resisting the annular sealing flange from assuming a non-coaxial position relative to the chamber during autoclaving treatment with the piston portion in the chamber and the locating member within the outer open end of the chamber under temperatures exceeding 120 degrees Celsius, and
   (d) a central bore through the annular sealing flange and the locating flange communicating with the socket for communication of fluid to the inner end of the tube.

An object of the present invention is to provide a sealing member on the inner end of a piston element received in a metal cylindrical chamber forming member which maintains a seal after autoclaving.

### Brief Description of the Drawings

Further aspects and advantages of the present invention will become apparent from the following description taken together with the accompanying drawings in which:

Figure 1 is a schematic side view of a pump mechanism in accordance with a first preferred embodiment of the present invention;

Figure 2 is an enlarged view of a portion of Figure 1; and

Figure 3 is a further enlarged view of a portion of Figure 1.

### Detailed Description of the Drawings

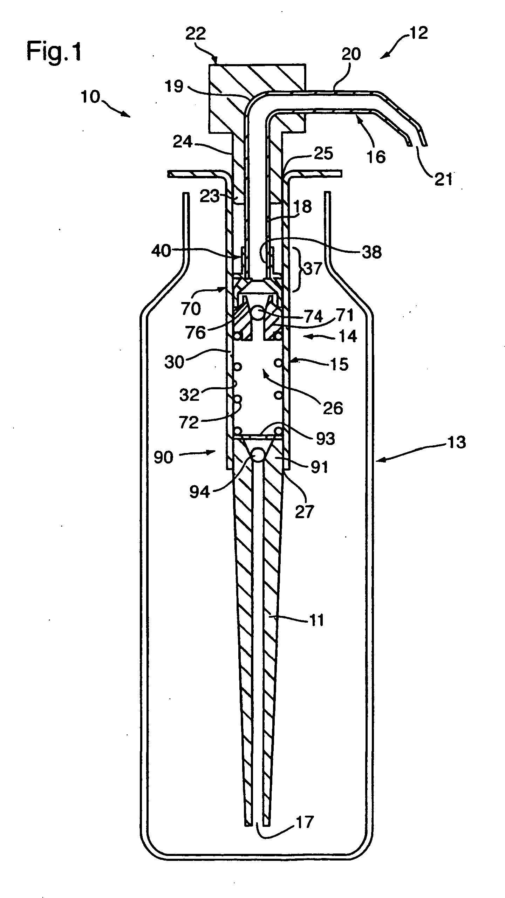

Figure 1 shows a pump mechanism 10 comprising a piston element 12 and a piston chamber forming member 14 disposed relative a reservoir bottle 13 for dispensing fluid from the bottle 13. The piston element 12 includes a metal tube 16 having a vertical portion 18, a curved portion 19 and a horizontal portion 20 ending at a discharge outlet 21. The piston element 12 includes a casing member 22 about the upper end of the vertical portion 18 of the tube and the curved portion 19. The casing member 22 has a locating portion 23 with external cylindrical guide surfaces 24 to guide the upper end of the vertical portion 18 of the tube 16 coaxially within the piston chamber forming member 14.

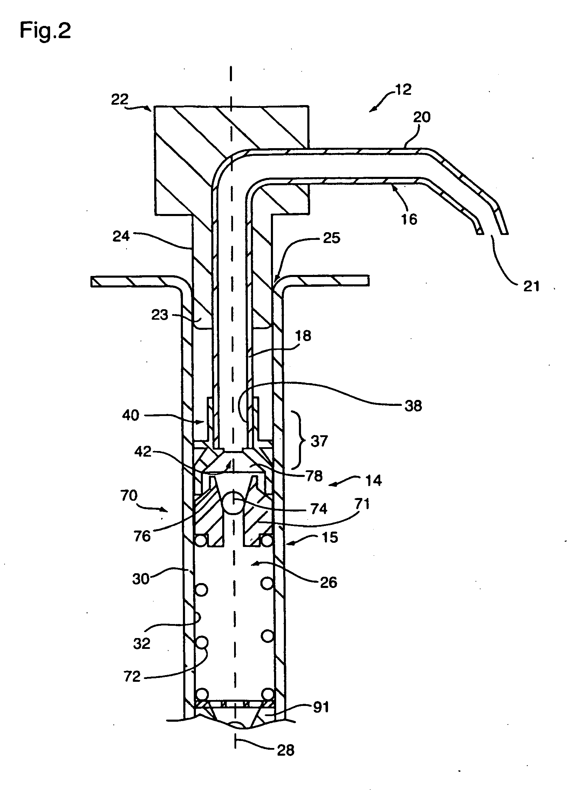

The piston chamber forming member 14 is formed from metal and has a metal cylinder 15 defining therein a cylindrical chamber 26 about a central axis 28 shown on Figure 2. The chamber 26 has a chamber wall 30 with an inner surface 32. The chamber 26 is open at an upper, outer end 25 and open at a lower, inner end 27. A hollow dip tube 11 extends downwardly from the inner end 27 of the chamber 26 to an inlet end 17 in communication with the reservoir bottle 13.

The piston element 12 includes an inner portion 37 at a lower end 38 of the tube 16 where a plastic annular sealing member 40 fixedly secured to the tube 16. The sealing member 40 is secured to the lower end of the tube 16 and provides a central bore 42 therethrough for fluid flow from a lower inner end of the sealing member 40 through the sealing member 40 and into the open lower end 38 of the tube 16. The sealing member 40 includes (a) an axially upwardly directed socket 44 for fixed, sealed engagement with the lower end 38 of tube 16, (b) a locating ring 46 for slidably locating the sealing member coaxially within the chamber 26, and (c) an annular sealing flange 48 to engage the inner surface 32 of the chamber wall 30 forming a substantially fluid impermeable seal therewith on sliding of the piston forming element inwardly and outwardly. The bore 42 extends through the sealing member 40 centrally through the socket 44, the annular locating ring 46 and the annular sealing flange 48.

The sealing member 40 has the tube receiving socket 44 formed with an upper tubular portion 50, an open upper outer end 52 and a cylindrical inner side wall 54 ending inwardly at an annular radially inwardly extending shoulder 56. A lower end 38 of the tube 16 is frictionally and sealably received inside the cylindrical inner side wall 54 of the socket 44 abutting on the shoulder 56. While not necessary, one or more radially inwardly extending ribs (not shown) may be provided on the inner side wall 54 of the tubular portion 50 of the socket 44 to ensure frictional and sealed engagement against removal of the tube 16 or fluid flow therepast.

The locating ring 46 is an annular ring which extends radially outwardly about the socket 44 and presents a cylindrical outer surface 58 sized to coaxially slide within the chamber 26 without creating any substantial resistance to sliding. The cylindrical outer surface 58 extends an axial extent indicated as A. This axial extent is selected to assist in maintaining the sealing member 40 coaxially within the cylindrical chamber 26 against tilting to assume a non-coaxial orientation relative to the chamber, particularly, during autoclaving treatment.

The sealing flange 48 extends axially downwardly from below the shoulder 56 about the bore 42, firstly as a conical portion 60 having both inner side wall surfaces 62 and outer side wall surfaces 64 frustoconical tapering axially downwardly and radially outwardly. The lower narrowed end 67 of the conical portion 60 merges into an axially extending annular sealing flange portion 68 having a generally cylindrical outer surface and a generally cylindrical inner surface. The sealing member 40 is made from a plastic material and the sealing flange 48 is sized such that the sealing flange portion 68 is inherently biased due to the resiliency of the plastic into engagement with the cylindrical inner surface 32 of the chamber wall 30 to prevent fluid flow in either direction therepast.

The locating ring 46 shown has an axial extent A about 1/6 of a diameter D of the chamber 26. The axial extent A is, preferably, at least 1/8 of the diameter D and, more preferably, at least 1/6, 1/5 or 1/4 of the diameter D. The pump mechanism 10 shown is adapted for autoclaving with the piston element 12 received within the piston chamber forming element 14. Autoclaving is to be carried out under elevated temperatures for periods of time, preferably, with the temperatures to be in the range, for example, of at least 110 degrees Celsius, or at least 120 degrees Celsius or at least 150 degrees Celsius. When autoclaving occurs under these elevated temperatures, the metal cylinder 15 expands greater than the plastic sealing member 40 with the result that the plastic sealing member 40 becomes loose within the metal cylinder 15 and the piston element 14 is free to adopt an angled orientation, that is, out of coaxial alignment with the central axis 28. When autoclaving is finished, the piston element 12 has a tendency to remain in the angled orientation such that on cooling to ambient temperatures, the metal cylinder 15 shrinks onto and compresses the angled sealing flange portion 68 confining it to adopt an oval cross-sectional shape when viewed normal to the central axis 28. The annular sealing flange portion 68 tends to maintain this oval cross-sectional shape after cooling and, in later use, on sliding of the piston element 12 coaxially in the chamber 26 forms an inferior seal with the inner surface 32 of the chamber wall 30 of the chamber than a preferred shape of the annular sealing flange portion 68; that is, a shape which is circular in cross-section normal the central axis 28.

The locating ring 46 assists in reducing the ability of the annular sealing flange 48 to adopt a configuration that is not coaxial with the central axis 28. The locating ring 46, in having its cylindrical outer surface of a radial size only marginally smaller than the radius of the chamber wall 32 and in having a substantially axial extent A of at least 1/8 of the diameter of the chamber 26 will, at all times, be capable of engaging the inner surface 32 of the chamber wall 30 of the chamber 26 to limit the extent to which the sealing member 40 may be tilted to a non-axial orientation. Limiting the extent to which the sealing member 40 can assume at an angled orientation will limit the extent to which the sealing flange may be deformed into an oval cross-sectional shape.

The locating ring 46 preferably has as large a diameter as possible without causing significant friction against sliding within the chamber wall 30. Preferably, the locating ring 46 has a diameter only marginally smaller than the diameter of the chamber 26, for example, preferably at least 99% of the diameter of the chamber, more preferably, at least 99.5% or 99.9% of the diameter of the chamber.

The piston forming element 12 may be considered to have a hollow stem including the tube 16 with an inner portion 37 comprising the inner end 38 of the tube 16 with the sealing member 40 thereon and with an outer portion 23 comprising the locating portion 23 of the casing member 22 with the external cylindrical guide surfaces 24 in the open end of the chamber 26. The inner portion 37 has the locating ring 46 assisting coaxial location within the chamber 26. The outer portion 23 has the guide surfaces 24 assisting coaxial location within the chamber 26. The inner portion 37 and outer portion 23 are axially spaced enhancing the ability of the axially spaced locating ring 46 and the guide surfaces 24 when received in the chamber 26 to cooperatively assist in coaxial location of the piston element 12 generally and the sealing flange 48 specifically coaxially within the chamber 26 before, during and after autoclaving.

The pump mechanism 10 has inward of the sealing member 40 an outer ball valve 70 and an inner ball valve 90 each providing for one way flow outwardly therepast but preventing flow inwardly therepast.

An inner ball valve seat member 91 of the inner ball valve 90 is fixedly secured in the inner end 27 of the chamber 26. The dip tube 11 is shown as an integral extension of the inner valve seat member 90. A ball cage member 93 is engaged above, outwardly of the inner ball valve seat member 91, and serves to retain a ball 94 above the inner ball valve seat member 91 yet permits fluid flow centrally therethrough.

A helical coil spring 72 has an inner end engage the ball cage member 93 urging it inwardly into the inner ball valve seat member 91. An outer end of the spring 72 engages on an outer ball valve seat member 71 of the upper outer ball valve 70 resiliently resisting inward, downward movement of the outer ball valve seat member 71.

The annular outer ball valve seat member 71 is slidable in the chamber 26 and biased axially upwardly outwardly into engagement with the sealing member 40 by the coil spring 72. A ball 74 for the outer ball valve 70 is received inside the upwardly opening frustoconical valve seat surface 76 to provide a one-way valve mechanism against fluid flow downwardly and inwardly therepast yet permit fluid flow upwardly and outwardly. The sealing member 40 has on the inner side surfaces 62 of the conical portion 60 at least one axially and radially inwardly extending vane 78 defining radial and axial passageways on either side therepast. The vane 78, when engaged by the ball 74, does not prevent fluid flow. The vane 78 assists in keeping the ball 74 in a position above the ball valve seat surface member 71.

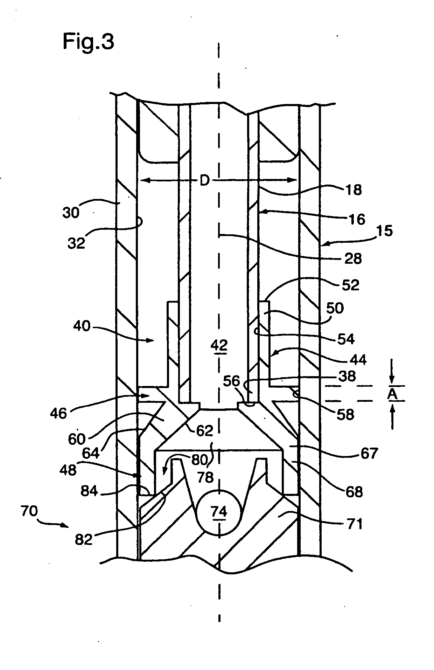

As seen in Figure 3, the ball valve seat member 71 has at its radially outermost surface at its upper outer end, an annular groove 80 ending at an inner end as a cam shoulder 82 which is angled to extend radially outwardly and axially inwardly for engagement with an inner end 84 of the annular sealing flange portion 68 to urge, under the bias of the spring 72, the sealing flange portion 68 radially outwardly into sealed engagement with the chamber wall 30.

Movement of the piston element 12 axially inwardly to a retracted position relative the piston chamber forming member 14 urges the sealing member 40 into the outer ball valve seat member 71 compressing the spring 72. On release of the piston element 12, the spring 72 biases the piston element 12 to return to an extended position. Reciprocal movement of the piston element 12 draws fluid from the reservoir in the inner end 17 of the dip tube 11 through the dip tube 11, through the inner end 27 of the chamber 26 through the tube 16 and dispenses it out the discharge outlet 21 of the tube 16.

While the invention has been described with reference to preferred embodiments, many modifications and variations will now occur to a person skilled in the art. For a definition of the invention, reference is made to the following claims.

## Claims

1. A pump (10) for dispensing fluids from a reservoir (13) comprising:
a piston-chamber forming member (14) formed from metal having a cylindrical chamber (26) about a central axis (28), said chamber (26) having a chamber wall (30), an inner end (27) in fluid communication with the reservoir and an open outer end (25);
a piston forming element having a piston portion (12) coaxially slidably received in the chamber (26),
the piston portion (12) including a hollow stem with an inner portion coaxially slidably received in the chamber (26) for reciprocal sliding inwardly and outwardly therein and with an outer portion extending outwardly of the open outer end (25) of the chamber (26),
the stem defining therein a central passageway with an inner inlet end (37) opening into the chamber (26) and an outer end communicating with a discharge outlet (21) on the outer portion of the stem out of the chamber (26),
an annular sealing member (40) fixedly secured to the inner end (37) of the stem within the chamber (26),
the sealing member (40) including an annular sealing flange (48) slidably engaging an inner surface (32) of the chamber wall (30) forming a substantially fluid impermeable seal therewith on sliding of said piston forming element inwardly and outwardly, and
a central bore (42) through the sealing member (40) providing for the inlet end of the central passageway to be in communication with the reservoir through the sealing member (40), wherein the sealing member (40) is made of plastic and further includes an annular locating flange (46) which is spaced axially from the annular sealing flange (48) and which slidably engages the inner surface (32) of the chamber wall (30) over an axial extent (A) at least equal to 1/8 of a diameter (D) of the chamber (26), which is sufficient to assist in resisting the annular sealing flange (48) from assuming a non-coaxial position relative to the chamber (26) during autoclaving treatment with the piston portion (12) in the chamber (26) and a locating portion (23) within the outer open end (25) of the chamber (26) under temperatures exceeding 120 degrees Celsius,
the central bore (42) at an outer end of the sealing member (40) providing an outwardly directed cylindrical socket (44), **characterized in that**
a locating portion (23) is fixedly carried on the stem slidably engaged within the chamber (26) proximate the open outer end (25) of the chamber (26) to assist in coaxially locating the stem coaxially of the central axis (28),
the stem includes a generally cylindrical metal tube (16) extending continuously inwardly from the outer portion through the locating portion (23) along the central axis (28) to an inner end (38) of the tube (16) which is coaxially received in the outwardly directed cylindrical socket (44) provided on the outer end of the sealing member (40),
an outlet one-way valve (70) between the chamber (26) and the annular sealing flange (48) permitting fluid flow through the central bore (42) only from the chamber (26) into the passageway.

2. A pump (10) as claimed in claim 1 wherein the annular locating flange (46) slidably engages the inner surface (32) of the chamber wall (30) over an axial extent (A) at least equal to 1/6 of a diameter of the chamber (26).

3. A pump (10) as claimed in claim 1 or 2 wherein in the outer portion the metal tube (16) is bent so as to form an extension of the tube extending generally radially outwardly from the central axis (28) to the discharge outlet (21).

4. A pump (10) as claimed in any one of claims 1 to 3 including,
an inlet one-way valve (90) between the reservoir (13) and the chamber (26) permitting fluid flow through the inner end (27) of said chamber (26) only from the reservoir (13) to the chamber (26);
wherein in operation,
(i) on the piston forming element sliding outwardly in said chamber (26) a vacuum is created in the chamber (26) which closes the outlet one-way valve (70) and fluid is drawn into the chamber (26) from the reservoir (13) past the inlet one-way valve (90), and
(ii) on the piston forming element sliding inwardly into the chamber (26) a pressure is created in the chamber (26) which closes the inlet one-way valve (90) and fluid is discharged from the chamber (26) past the outlet one-way valve (70) through the central bore (42), into the inlet end of the passageway and out the discharge outlet (21).

5. A pump as claimed in any one of claims 1 to 4 wherein the diameter of the annular locating flange (46) is at least 99% of the diameter (D) of the chamber (26).

6. A pump (10) for dispensing fluids from a reservoir as claimed in claim 1, wherein:
the annular sealing member (40) is a plastic piston sealing member within the chamber (26) fixedly secured to the inner end (37) of the tube (16),
the sealing member (40) having
at an inner end, the annular sealing flange (48),
the annular locating flange (46) spaced axially outwardly of the annular sealing flange (48),
the central bore (42) extending through the annular sealing flange (48) and the locating flange (46) communicating with the socket (44) for communication of fluid to the inner end (37) of the tube (16).

7. A pump (10) as claimed in claim 6 wherein the annular locating flange (46) slidably engages the inner surface (32) of the chamber wall (30) over an axial extent (A) at least equal to 1/6 of a diameter (D) of the chamber (26).

8. A pump (10) as claimed in any one of claims 6 or 7 wherein in the outer portion the metal tube (16) bends so as to form an extension of the tube extending generally radially outwardly from the central axis (28) to the discharge outlet (21).

9. A pump (10) as claimed in any one of claims 6 to 8 including:
an inlet one-way valve (90) between the reservoir (13) and the chamber (26) permitting fluid flow through the inner end (27) of said chamber (26) only from the reservoir (13) to the chamber (26);
wherein in operation,
(i) on the piston forming element sliding outwardly in said chamber (26) fluid a vacuum is created in the chamber (26) which closes the outlet one-way valve (70) and fluid is drawn into the chamber (26) from the reservoir (13) past the inlet one-way valve (90), and
(ii) on the piston forming element sliding inwardly into the chamber (26) a pressure is created in the chamber (26) which closes the inlet one-way valve (90) and fluid is discharged from the chamber (26) past the outlet one-way valve (70) through the central bore (42) into the inlet end of the passageway and out the discharge outlet (21).

## Patentansprüche

1. Eine Pumpe (10) zur Abgabe von Flüssigkeiten aus einem Reservoir (13) umfassend:
ein Kolben-Kammer bildendes Element (14) ausgebildet aus Metall mit einer zylindrischen Kammer (26) um eine Mittelachse (28) herum, wobei die Kammer (26) eine Kammerwand (30), ein inneres Ende (27) in Fluidverbindung mit dem Reservoir und ein offenes äußeres Ende (25) aufweist;
ein Kolben bildendes Element mit einem Kolbenbereich (12), der koaxial verschiebbar in der Kammer (26) aufgenommen ist,
der Kolbenbereich (12) umfasst einen hohlen Stiel mit einem inneren Teil, das koaxial verschiebbar in der Kammer (26) aufgenommen ist, um darin einwärts und auswärts hin und her zu gleiten und mit einem äußeren Teil, der sich von dem offenen äußeren Ende (25) der Kammer (26) nach außen erstreckt,
der Stiel definiert darin einen zentralen Durchgang mit einem inneren Einlassende (37),
der sich in die Kammer (26) öffnet, und einem äußeren Ende, das mit einer Abflussöffnung (21) auf dem äußeren Teil des Stiels außerhalb der Kammer (26) in Verbindung steht,
ein ringförmiges Dichtungselement (40), das fest mit dem inneren Ende (37) des Stiels innerhalb der Kammer (26) gesichert ist,
das Dichtungselement (40) weist einen ringförmigen Dichtungsflansch (48) auf, der verschiebbar gegen eine innere Oberfläche (32) der Kammerwand (30) angreift, um damit eine im Wesentlichen fluidundurchlässige Abdichtung auszubilden für das einwärtige und auswärtige Gleiten des Kolben bildenden Elements, und
eine zentrale Bohrung (42) durch das Dichtungselement (40) stellt für das Einlassende des zentralen Durchgangs eine Verbindung mit dem Reservoir durch das Dichtungselement (40) hindurch bereit, wobei das Dichtungselement (40) aus Kunststoff hergestellt ist und weiter einen ringförmigen Positionierflansch (46) umfasst,
der axial von dem ringförmigen Dichtungsflansch (48) beabstandet ist und der gleitend gegen die innere Oberfläche (32) der Kammerwand (30) über eine axiale Ausdehnung (A) von mindestens gleich einem 1/8 des Durchmessers (D) der Kammer (26) angreift, was ausreicht um den ringförmigen Dichtungsflansch (48) im Widerstehen zu unterstützen eine nicht koaxiale Position relativ zu der Kammer (26) anzunehmen, während einer Autoklaven-Behandlung bei Temperaturen über 120°C mit dem Kolbenbereich (12) in der Kammer (26) und einem Positionierbereich (23) in dem äußeren offenen Ende (25) der Kammer (26),
die zentrale Bohrung (42) bildet an einem äußeren Ende des Dichtungselements (40) eine nach außen gerichtete zylindrische Buchse (44) aus,
**dadurch gekennzeichnet, dass**
ein Positionierbereich (23), der fest an dem Stiel angeordnet ist, verschiebbar in der Nähe des offenen äußeren Endes (25) der Kammer (26) in der Kammer (26) aufgenommen ist, um die koaxiale Positionierung des Stiels koaxial zur Mittelachse (28) zu unterstützen,
der Stiel umfasst ein im Allgemeinen zylindrisches Metallrohr (16), das sich kontinuierlich von dem äußeren Bereich durch den Positionierbereich (23) entlang der Mittelachse (28) nach Innen zu einem inneren Ende (38) des Rohrs (16) erstreckt, das koaxial in dem nach außen gerichteten zylindrischen Sockel (44) aufgenommen ist, der an dem äußeren Ende des Dichtungselements (40) vorgesehen ist,
ein Einwege-Auslassventil (70) zwischen der Kammer (26) und dem ringförmigen Dichtungsflansch (48), das eine Flüssigkeitsströmung durch die zentrale Bohrung (42) ausschließlich von der Kammer (26) in den Flüssigkeitsdurchgang erlaubt.

2. Eine Pumpe (10) nach Anspruch 1, wobei der ringförmige Anlageflansch (46) gleitend gegen die innere Oberfläche (32) der Kammerwand (30) über eine axiale Ausdehnung (A) von mindestens gleich 1/6 des Durchmessers der Kammer (26) angreift.

3. Eine Pumpe (10) nach Anspruch 1 oder 2, wobei der äußere Bereich des Metallrohrs (16) abknickt, um so eine Verlängerung des Rohrs zu bilden, die sich im Allgemeinen von der Mittelachse (28) radial nach außen zu der Abflussöffnung (21) erstreckt.

4. Eine Pumpe (10) nach einem der Ansprüche 1 bis 3 umfassend,
ein Einwege-Einlassventil (90) zwischen dem Reservoir (13) und der Kammer (26), das eine Flüssigkeitsströmung durch das innere Ende (27) der Kammer (26) ausschließlich von dem Reservoir (13) in die Kammer (26) erlaubt;
wobei im Betrieb,
(i) durch das in der Kammer (26) auswärts gleitende Kolben bildende Element in der Kammer (26) ein Vakuum erzeugt wird, das das Einwege-Auslassventil (70) verschließt und Flüssigkeit aus dem Reservoir (13) über das Einwege-Einlassventil (90) in die Kammer (26) zieht, und
(ii) durch das in der Kammer (26) einwärts gleitende Kolben bildende Element in der Kammer (26) ein Druck erzeugt wird, der das Einwege-Einlassventil (90) verschließt und Flüssigkeit von der Kammer (26) über das Einwege-Auslassventil (70) durch die zentrale Bohrung (42) in das Einlassende des Durchgangs und aus der Abflussöffnung (21) abgibt.

5. Eine Pumpe nach einem der Ansprüche 1 bis 4, wobei der Durchmesser des ringförmigen Anlageflansches (46) mindestens 99 % des Durchmessers (D) der Kammer (26) ist.

6. Eine Pumpe (10) zur Abgabe von Flüssigkeiten aus einem Reservoir nach Anspruch 1, wobei:
das ringförmige Dichtungselement (40) ein Kunststoff-Kolbendichtungselement in der Kammer (26) ist, das fest an dem inneren Ende (37) des Rohrs (16) gesichert ist,
das Dichtungselement (40) weist an seinem inneren Ende den ringförmigen Dichtungsflansch (48) auf,
der ringförmige Positionierflansch (46) ist axial auswärts beabstandet von dem ringförmigen Dichtungsflansch (48),
die zentrale Bohrung (42) erstreckt sich in Verbindung zu dem Sockel (44) durch den ringförmigen Dichtungsflansch (48) und den Positionierflansch (46) für eine Flüssigkeitsverbindung zu dem inneren Ende (37) des Rohrs (16).

7. Eine Pumpe (10) nach Anspruch 6, wobei der ringförmige Anlageflansch (46) gleitend gegen die innere Oberfläche (32) der Kammerwand (30) über eine axiale Ausdehnung (A) von mindestens gleich 1/6 des Durchmessers (D) der Kammer (26) angreift.

8. Eine Pumpe (10) nach einem der Ansprüche 6 oder 7, wobei der äußere Bereich des Metallrohrs (16) abknickt, um so eine Verlängerung des Rohrs zu bilden, die sich im Allgemeinen von der Mittelachse (28) radial nach außen zu der Abflussöffnung (21) erstreckt.

9. Eine Pumpe (10) nach einem der Ansprüche 6 bis 8 umfassend:
ein Einwege-Einlassventil (90) zwischen dem Reservoir (13) und der Kammer (26), das eine Flüssigkeitsströmung durch das innere Ende (27) der Kammer (26) ausschließlich von dem Reservoir (13) in die Kammer (26) erlaubt;
wobei im Betrieb,
(i) durch das in der Kammer (26) auswärts gleitende Kolben bildende Element in der Kammer (26) ein Vakuum erzeugt wird, das das Einwege-Auslassventil (70) verschließt und Flüssigkeit aus dem Reservoir (13) über das Einwege-Einlassventil (90) in die Kammer (26) zieht, und
(ii) durch das in der Kammer (26) einwärts gleitende Kolben bildende Element in der Kammer (26) ein Druck erzeugt wird, der das Einwege-Einlassventil (90) verschließt und Flüssigkeit von der Kammer (26) über das Einwege-Auslassventil (70) durch die zentrale Bohrung (42) in das Einlassende des Durchgangs und aus der Abflussöffnung (21) abgibt.

## Revendications

1. Pompe (10) pour distribuer des fluides à partir d'un réservoir (13) comprenant :
un élément formant chambre de piston (14) réalisé en métal, comportant une chambre cylindrique (26) autour d'un axe central (28), ladite chambre (26) comportant une paroi de chambre (30), une extrémité interne (27) en communication fluidique avec le réservoir et une extrémité externe ouverte (25) ;
un élément formant piston comportant une partie de piston (12) reçue à coulissement de façon coaxiale dans la chambre (26),
la partie de piston (12) comprenant une tige creuse dont une partie interne est reçue à coulissement de façon coaxiale dans la chambre (26) pour y coulisser en va-et-vient vers l'intérieur et vers l'extérieur et dont une partie externe s'étend vers l'extérieur de l'extrémité externe ouverte (25) de la chambre (26),
la tige définissant à l'intérieur un passage central dont une extrémité d'entrée interne (37) aboutit dans la chambre (26) et dont une extrémité externe communique avec une sortie d'évacuation (21) située sur la partie externe de la tige, à l'extérieur de la chambre (26),
un élément d'étanchéité annulaire (40) assujetti de façon fixe à l'extrémité interne (37) de la tige à l'intérieur de la chambre (26),
l'élément d'étanchéité (40) comprenant une bride d'étanchéité annulaire (48) s'appliquant de façon coulissante sur une surface interne (32) de la paroi de chambre (30) pour former avec elle un joint sensiblement étanche aux fluides lors du coulissement vers l'intérieur et vers l'extérieur dudit élément formant piston, et
un orifice central (42) à travers l'élément d'étanchéité (40) permettant à l'extrémité d'entrée du passage central d'être en communication avec le réservoir par l'intermédiaire de l'élément d'étanchéité (40), dans laquelle l'élément d'étanchéité (40) est réalisé en matière plastique et comprend en outre une bride de positionnement annulaire (46) qui est espacée axialement de la bride d'étanchéité annulaire (48) et qui s'applique de façon coulissante sur la surface interne (32) de la paroi de chambre (30) sur une distance axiale (A) au moins égale à 1/8 d'un diamètre (D) de la chambre (26), ce qui est suffisant pour aider à empêcher la bride d'étanchéité annulaire (48) de se placer dans une position non coaxiale par rapport à la chambre (26) au cours d'un traitement d'autoclavage avec la partie de piston (12) dans la chambre (26) et une partie de positionnement (23) à l'intérieur de l'extrémité externe ouverte (25) da la chambre (26) dans des conditions de températures supérieures à 120 degrés Celsius,
l'orifice central (42) au niveau d'une extrémité externe de l'élément d'étanchéité (40) formant une douille cylindrique orientée vers l'extérieur (44), **caractérisée en ce que**
une partie de positionnement (23) est supportée de façon fixe sur la tige insérée de façon coulissante dans la chambre (26) à proximité de l'extrémité externe ouverte (25) de la chambre (26) pour faciliter le positionnement de la tige coaxialement à l'axe central (28),
la tige comprend un tube métallique généralement cylindrique (16) s'étendant de façon continue vers l'intérieur depuis la partie externe, en passant par la partie de positionnement (23) le long de l'axe central (28) jusqu'à une extrémité interne (38) du tube (16) qui est reçue coaxialement dans la douille cylindrique orientée vers l'extérieur (44) située sur l'extrémité externe de l'élément d'étanchéité (40),
une soupape unidirectionnelle de sortie (70) entre la chambre (26) et la bride d'étanchéité annulaire (48) permettant l'écoulement de fluide à travers l'orifice central (42) uniquement depuis la chambre (26) vers l'intérieur du passage.

2. Pompe (10) selon la revendication 1, dans laquelle la bride de positionnement annulaire (46) s'applique de façon coulissante sur la surface interne (32) de la paroi de chambre (30) sur une étendue axiale (A) au moins égale à 1/6 d'un diamètre de la chambre (26).

3. Pompe (10) selon la revendication 1 ou la revendication 2, dans laquelle la partie externe du tube métallique (16) est courbée de façon à former un prolongement du tube s'étendant de façon générale radialement vers l'extérieur à partir de l'axe central (28) vers la sortie d'évacuation (21).

4. Pompe (10) selon l'une quelconque des revendications 1 à 3, comprenant :
une soupape unidirectionnelle d'entrée (90) entre le réservoir (13) et la chambre (26) permettant l'écoulement de fluide à travers l'extrémité interne (27) de ladite chambre (26) uniquement depuis le réservoir (13) vers la chambre (26) ;
dans laquelle, en fonctionnement,
(i) lorsque l'élément formant piston coulisse vers l'extérieur dans ladite chambre (26), il se crée un vide dans la chambre (26), ce qui ferme la soupape unidirectionnelle de sortie (70) et du fluide est aspiré à l'intérieur de la chambre (26) à partir du réservoir (13) en passant à travers la soupape unidirectionnelle d'entrée (90), et
(ii) lorsque l'élément formant piston coulisse vers l'intérieur en pénétrant dans la chambre (26), il se crée une pression dans la chambre (26), ce qui ferme la soupape unidirectionnelle d'entrée (90) et du fluide est évacué de la chambre (26) par l'intermédiaire de la soupape unidirectionnelle de sortie (70), en traversant l'orifice central (42) pour pénétrer dans l'extrémité d'entrée du passage et sortir par la sortie d'évacuation (21).

5. Pompe (10) selon l'une quelconque des revendications 1 à 4, dans laquelle le diamètre de la bride de positionnement annulaire (46) est au moins égal à 99% du diamètre (D) de la chambre (26).

6. Pompe (10) pour distribuer des fluides à partir d'un réservoir selon la revendication 1, dans laquelle :
l'élément d'étanchéité annulaire (40) est un élément d'étanchéité de piston en plastique situé à l'intérieur de la chambre (26) et assujetti de façon fixe à l'extrémité interne (37) du tube (16),
l'élément d'étanchéité (40) comportant
au niveau d'une extrémité interne, la bride d'étanchéité annulaire (48),
la bride de positionnement annulaire (46) espacée axialement vers l'extérieur de la bride d'étanchéité annulaire (48),
l'orifice central (42) s'étendant à travers la bride d'étanchéité annulaire (48) et la bride de positionnement (46) communiquant avec la douille (44) pour assurer la communication de fluide vers l'extrémité interne (37) du tube (16).

7. Pompe (10) selon la revendication 6, dans laquelle la bride de positionnement annulaire (46) s'applique de façon coulissante sur la surface interne (32) de la paroi de chambre (30) sur une étendue axiale (A) au moins égale à 1/6 d'un diamètre (D) de la chambre (26).

8. Pompe (10) selon l'une quelconque des revendications 6 et 7, dans laquelle la partie externe du tube métallique (16) est courbée de façon à former un prolongement du tube s'étendant de façon générale radialement vers l'extérieur à partir de l'axe central (28) vers la sortie d'évacuation (21).

9. Pompe (10) selon l'une quelconque des revendications 6 à 8, comprenant :
une soupape unidirectionnelle d'entrée (90) entre le réservoir (13) et la chambre (26) permettant l'écoulement de fluide à travers l'extrémité interne (27) de ladite chambre (26) uniquement depuis le réservoir (13) vers la chambre (26) ;
dans laquelle, en fonctionnement,
(i) lorsque l'élément formant piston coulisse vers l'extérieur dans ladite chambre (26), il se crée un vide dans la chambre (26), ce qui ferme la soupape unidirectionnelle de sortie (70) et du fluide est aspiré à l'intérieur de la chambre (26) à partir du réservoir (13) en passant à travers la soupape unidirectionnelle d'entrée (90), et
(ii) lorsque l'élément formant piston coulisse vers l'intérieur en pénétrant dans la chambre (26), il se crée une pression dans la chambre (26), ce qui ferme la soupape unidirectionnelle d'entrée (90) et du fluide est évacué de la chambre (26) par l'intermédiaire de la soupape unidirectionnelle de sortie (70), en traversant l'orifice central (42) pour pénétrer dans l'extrémité d'entrée du passage et sortir par la sortie d'évacuation (21).
